# EUROPEAN PATENT APPLICATION

(11) **EP 4 509 561 A1**
(43) Date of publication of application: **19.02.2025**
(21) Application number: 23807316.7
(22) Date of filing: 04.04.2023
(51) Int. Cl.: C08L 67/00, C08L 101/16

(54) **COMPOSITION**

(30) Priority: 16.05.2022 JP 2022080260
(71) Applicant: Sumitomo Chemical Company, Limited, Tokyo 103-6020 (JP); Newlight Technologies, Inc., Huntington Beach CA 92647 (US)
(72) Inventor: CHIBA, Shunsuke, Ichihara-shi, Chiba 299-0195 (JP); SAKURADA, Kenta, Ichihara-shi, Chiba 299-0195 (JP); DOBASHI, Tetsuro, Ichihara-shi, Chiba 299-0195 (JP)
(74) Representative: Vossius & Partner Patentanwälte Rechtsanwälte mbB
(86) International application number: PCT/JP2023/013988
(87) International publication number: WO 2023/223701

(57) **Abstract**

A composition contains a polymer B and a compound C. The polymer B is an aliphatic polyester, and a content of the compound C is 0.1 parts by mass or more and less than 100 parts by mass with respect to 100 parts by mass of a total of the polymer B and the compound C. The compound C has at least one functional group selected from the group consisting of a heterocyclic group having two or more heteroatoms, a cyclic ether group, an acid anhydride group, an isocyanate group, and a carbodiimide group.

## Description

### Technical Field

The present invention relates to a composition.

### Background Art

An aliphatic polyester-based polymer is a resin that can be synthesized by renewable resources without using fossil resources and has low environmental load, and is a resin excellent in molding processability and mechanical properties. For this reason, hitherto, by adding the aliphatic polyester-based polymer to various packaging materials, various containers such as bottles, food packaging materials, container caps, stationery, daily goods, fibers for carpets and sofas, interior and exterior materials for automobiles, electrical and electronic components, building materials such as interior materials for buildings and houses, and the like, the environmental load can be reduced. In recent years, improvements in instability of an extrusion amount or an injection amount during melt processing due to thermal degradation of the aliphatic polyester-based polymer are often required for these articles.

Therefore, as a means for responding to these requirements, as described in Patent Literature 1, there is considered a method in which a known stabilizer mixture such as a phenolic antioxidant, phosphonite or phosphite, and a thiosynergist is blended with an aliphatic polyester-based polymer.

### Citation List

### Patent Literature

Patent Literature 1: Japanese Unexamined Patent Publication No. 2011-526317

### Summary of Invention

### Technical Problem

However, in a known stabilizer such as a phenolic antioxidant, phosphonite or phosphite, and a thiosynergist, the aliphatic polyester-based polymer cannot suppress deterioration due to heating for a long time. Therefore, even when a composition in which a known stabilizer such as a phenolic antioxidant, phosphonite or phosphite, and a thiosynergist is blended with an aliphatic polyester is heated in a cylinder for a certain period of time or longer and then extruded from a die to form a molten strand, there is a problem in that uniformity of the thickness of a strand to be obtained is low.

The present invention has been made in view of the above problems, and an object thereof is to provide a composition capable of increasing uniformity of the thickness of a strand to be obtained when the composition is heated in a cylinder for a certain period of time or longer and then extruded from a die to form a molten strand, while containing an aliphatic polyester-based polymer.

### Solution to Problem

[1] A composition containing:
   a polymer B; and
   a compound C, in which
   the polymer B is an aliphatic polyester,
   a content of the compound C is 0.1 parts by mass or more and less than 100 parts by mass with respect to 100 parts by mass of a total of the polymer B and the compound C, and
   the compound C has at least one functional group selected from the group consisting of a heterocyclic group having two or more heteroatoms, a cyclic ether group, an acid anhydride group, an isocyanate group, and a carbodiimide group.
[2] The composition described in [1], in which the heterocyclic group has two or more kinds of heteroatoms.
[3] The composition described in [2], in which the two or more kinds of heteroatoms include a nitrogen atom and an oxygen atom.
[4] The composition described in any one of [1] to [3], in which the heterocyclic group is an oxazolyl group.
[5] The composition described in any one of [1] to [4], in which the cyclic ether group is an epoxy group.
[6] The composition described in any one of [1] to [5], in which the compound C is a polymer having a weight average molecular weight Mw of 5000 or more.
[7] The composition described in any one of [1] to [6], in which the compound C is a polymer having the functional group in a side chain.
[8] The composition described in any one of [1] to [7], in which the polymer B is a poly(3-hydroxyalkanoate)-based polymer having a melting point of 150°C or higher.
[9] The composition described in any one of [1] to [8], further containing an olefin-based polymer A.

### Advantageous Effects of Invention

According to the present invention, there is provided a composition having high uniformity of the thickness of a strand when the composition is heated in a cylinder for a certain period of time or longer and then extruded from a die to form a molten strand, while containing an aliphatic polyester-based polymer.

### Description of Embodiments

Hereinafter, some embodiments of the present invention will be described in detail. However, the present invention is not limited to the following embodiments.

### (Composition)

A composition I according to an embodiment contains a polymer B and a compound C, and may contain an olefin-based polymer A.

### <Polymer B>

The polymer B is an aliphatic polyester-based polymer.

The aliphatic polyester-based polymer has a structure of a polycondensate of an aliphatic polyvalent carboxylic acid component and an aliphatic polyhydric alcohol component or a polycondensate of an aliphatic hydroxycarboxylic acid, and the main chain of the repeating unit does not contain an aromatic hydrocarbon structure.

Examples of the aliphatic polyester-based polymer include a polymer of a hydroxycarboxylic acid or a lactone, a polycondensate of a diol and a dicarboxylic acid, and a copolymer thereof. When the polymer B is a copolymer, the form of arrangement of the copolymer may be any form of a random copolymer, an alternating copolymer, a block copolymer, a graft copolymer, and the like.

Furthermore, those may be one in which at least a part thereof is crosslinked with a crosslinking agent such as a polyvalent isocyanate, such as xylylene diisocyanate or 2,4-tolylene diisocyanate, or a polysaccharide, such as cellulose, acetyl cellulose, or ethyl cellulose. Further, those may be one in which at least a part thereof may have any structure of linear, cyclic, branched, star, three-dimensional network structures, and the like, there is no any limitation, and those may be a copolymer with a polyolefin-based resin or a graft polymer with a polyolefin-based resin.

Furthermore, this polymer B can be used singly or in combination.

Examples of the hydroxycarboxylic acid include a hydroxycarboxylic acid having 2 to 18 carbon atoms, a hydroxycarboxylic acid having 6 or less carbon atoms is preferable, and a hydroxycarboxylic acid having 4 carbon atoms is most preferable. Specific examples thereof include glycolic acid, L-lactic acid, D-lactic acid, D,L-lactic acid, 3-hydroxybutyrate, 3-hydroxyvalerate, 3-hydroxypropionate, 4-hydroxybutyrate, 4-hydroxyvalerate, 5-hydroxyvalerate, 3-hydroxypentenoate, 3-hydroxyhexanoate, 3-hydroxyheptanoate, 3-hydroxyoctanoate, 3-hydroxynonanoate, and 3-hydroxydecanoate.

Examples of the lactone include propiolactone, butyrolactone, valerolactone, caprolactone, and laurolactone.

The diol is preferably a diol having 2 to 10 carbon atoms. In particular, an aliphatic diol having 2 to 4 carbon atoms or an alicyclic diol having 5 to 6 carbon atoms is more preferable. Specific examples thereof include ethylene glycol, 1,3-propanediol, 1,4-butanediol, 1,2-butanediol, 1,5-pentanediol, 1,6-hexanediol, 1,8-octanediol, 1,10-decanediol, 1,12-dodecanediol, 1,14-tetradecanediol, 1,16-hexadecanediol, 1,18-octadecanediol, 1,2-cyclohexanediol, 1,4-cyclohexanediol, 1,2-cyclohexanedimethylol, and 1,4-cyclohexanedimethylol.

The dicarboxylic acid is preferably an aliphatic dicarboxylic acid having 2 to 12 carbon atoms. In particular, an aliphatic dicarboxylic acid having 2 to 6 carbon atoms or an alicyclic dicarboxylic acid having 5 to 6 carbon atoms is more preferable. Specific examples thereof include oxalic acid, malonic acid, succinic acid, glutaric acid, adipic acid, pimelic acid, suberic acid, azelaic acid, sebacic acid, undecadicarboxylic acid, dodecadicarboxylic acid, 1,14-tetradecanedicarboxylic acid, 1,16-hexadecanedicarboxylic acid, 1,18-octadecanedicarboxylic acid, a dimer acid and a hydrogenated product thereof, hexahydrophthalic acid, hexahydroisophthalic acid, and hexahydroterephthalic acid. Furthermore, these dicarboxylic acids may be derivatives such as an alkyl ester having 1 to 4 carbon atoms and an acid anhydride.

Among the aliphatic polyester-based polymers, it is preferable to use polylactic acid or polybutylene succinate, poly(butylene succinate-co-butylene adipate), polycaprolactone, poly(3-hydroxybutyrate), poly(3-hydroxybutyrate-co-3-hydroxyhexanoate), and polyglycolic acid.

When polylactic acid is used as the polymer B, the polylactic acid is preferably one in which the proportion of the L-form in the lactic acid component constituting the polylactic acid is preferably 94 mol% or more. By setting the proportion of the L-form in such a range, it is possible to prevent a decrease in melting point.

### (Poly(3-hydroxyalkanoate)-based polymer)

The polymer B can be a poly(3-hydroxyalkanoate)-based polymer having a melting point of 150°C or higher.

The poly(3-hydroxyalkanoate)-based polymer is a polyhydroxyalkanoate, that is, a polycondensate (polyester) of a hydroxyalkanoic acid, and necessarily contains a repeating unit of a 3-hydroxyalkanate represented by formula (1). In formula (1), R is a hydrogen atom, a halogen atom, an alkyl group having 1 to 15 carbon atoms, a cyano group, an amino group having 1 to 18 carbon atoms, an alkoxy group (alkyloxy group) having 1 to 11 carbon atoms, an amide group having 1 to 20 carbon atoms, an aryl group having 6 to 12 carbon atoms, or a monovalent heterocyclic group having 1 to 9 carbon atoms. These groups may have a substituent. In particular, from the viewpoint of compatibility with a component (for example, the polymer A) except the polymer B contained in the composition, R is preferably an alkyl group having 1 to 8 carbon atoms, an amide group having 1 to 20 carbon atoms, or an aryl group having 6 to 8 carbon atoms.

[-O-CHR-CH₂-CO-] ... (1)

Examples of the halogen atom include F, Cl, Br, and I.

The alkyl group having 1 to 15 carbon atoms may be linear or branched. The number of carbon atoms of the alkyl group is preferably 1 to 8 and more preferably 1 to 4. Examples of the alkyl group include a methyl group, an ethyl group, a propyl group, an isopropyl group, a butyl group, an isobutyl group, a sec-butyl group, a tert-butyl group, a pentyl group, an isopentyl group, a 2-methylbutyl group, a 1-methylbutyl group, a hexyl group, an isohexyl group, a 3-methylpentyl group, a 2-methylpentyl group, a 1-methylpentyl group, a heptyl group, an octyl group, an isooctyl group, a 2-ethylhexyl group, a 3,7-dimethyloctyl group, a nonyl group, a decyl group, an undecyl group, a dodecyl group, a tetradecyl group, and a pentadecyl group.

Examples of the amino group having 1 to 18 carbon atoms include an amino group, an alkylamino group, a dialkylamino group, an arylamino group, an alkylarylamino group, a benzylamino group, and a dibenzylamino group.

Examples of the alkylamino group include a methylamino group, an ethylamino group, a propylamino group, a butylamino group, a pentylamino group, a hexylamino group, a heptylamino group, an octylamino group, a nonylamino group, a decylamino group, a dodecylamino group, an isopropylamino group, an isobutylamino group, an isopentylamino group, a sec-butylamino group, a tert-butylamino group, a sec-pentylamino group, a tert-pentylamino group, a tert-octylamino group, a neopentylamino group, a cyclopropylamino group, a cyclobutylamino group, a cyclopentylamino group, a cyclohexylamino group, a cycloheptylamino group, a cyclooctylamino group, a 1-adamantamino group, and 2-adamantamino group.

Examples of the dialkylamino group include a dimethylamino group, a diethylamino group, a dipropylamino group, a dibutylamino group, a dipentylamino group, a diisopropylamino group, a diisobutylamino group, a diisopentylamino group, a methylethylamino group, a methylpropylamino group, a methylbutylamino group, a methylisobutylamino group, a dicyclopropylamino group, a pyrrolidino group, a piperidino group, and a piperazino group.

Examples of the arylamino group include an anilino group, a 1-naphthylamino group, a 2-naphthylamino group, an o-toluidino group, a m-toluidino group, a p-toluidino group, a 1-fluoreneamino group, a 2-fluoreneamino group, a 2-thiazoleamino group, and a p-terphenylamino group.

Examples of the alkylarylamino group include an N-methylanilino group, an N-ethylanilino group, an N-propylanilino group, an N-butylanilino group, an N-isopropylanilino group, and an N-pentylanilino group.

Examples of the alkoxy group having 1 to 11 carbon atoms include a methoxy group, an ethoxy group, a propoxy group, an isopropoxy group, a butoxy group, an isobutoxy group, a sec-butoxy group, a tert-butoxy group, a cyclopropoxy group, a cyclobutoxy group, and a cyclopentoxy group.

The "amide group" means a group obtained by removing one hydrogen atom bonded to a nitrogen atom from a carboxylic amide. Examples of the amide group having 1 to 20 carbon atoms include a group represented by -NH-C(=O)-R^{A} (provided that, R^{A} is a hydrogen atom or a monovalent organic group) such as a formamide group, an acetamide group, a propionamide group, a butyramide group, a benzamide group, a trifluoroacetamide group, or a pentafluorobenzamide group, and a group represented by -N(-C(=O)-R^{A})(-C(=O)-R^{B}) (provided that, R^{A} and R^{B} are each independently a hydrogen atom or a monovalent organic group) such as a diformamide group, a diacetamide group, a dipropioamide group, a dibutyroamide group, a dibenzamide group, a ditrifluoroacetamide group, or a dipentafluorobenzamide group. The organic group can be an alkyl group, an alkoxy group, or an aryl group which may be substituted with a halogen atom. Among them, the amide group is preferably a formamide group, an acetamide group, a propionamide group, a butyroamide group, or a benzamide group.

Examples of the aryl group having 6 to 12 carbon atoms include a phenyl group, a tolyl group, a xylyl group, a naphthyl group, and a biphenyl group, and among them, a phenyl group, a tolyl group, and a xylyl group are more preferable.

Examples of the heteroatom of the monovalent heterocyclic group having 1 to 9 carbon atoms include N, O, and S, may be saturated or unsaturated, may have a single heteroatom or a plurality of heteroatoms, and may have different types of heteroatoms. Examples of such a heterocyclic group include a thienyl group, a pyrrolyl group, a furyl group, a pyridyl group, a piperidinyl group, a quinolinyl group, an isoquinolinyl group, a pyrimidinyl group, a triazinyl group, and a thiazolyl group.

The repeating unit of the polymer B may consist only of one or more kinds of 3-hydroxyalkanoate represented by formula (1), and may have one or more kinds of 3-hydroxyalkanoate represented by formula (1) and one or more kinds of other hydroxyalkanoates.

The polymer B preferably contains 50 mol% or more, and more preferably 70 mol% or more, of the repeating unit of 3-hydroxyalkanoate represented by formula (1) with respect to the total repeating unit (100 mol%) of the hydroxyalkanoate.

Examples of the 3-hydroxyalkanoate represented by formula (1) include, when R is a hydrogen atom or an alkyl group represented by CₙH₂ₙ₊₁ and n is an integer of 1 to 15, 3-hydroxybutyrate with n = 1 (hereinafter, sometimes referred to as 3HB), 3-hydroxyvalerate with n = 2 (hereinafter, sometimes referred to as 3HV), 3-hydroxyhexanoate with n = 3 (hereinafter, sometimes referred to as 3HH), 3-hydroxyoctanoate with n = 5, 3-hydroxyoctadecanoate with n = 15, and 3-hydroxypropionate in which R is a hydrogen atom.

Examples of the polymer B having only one repeating unit represented by formula (1) include poly(3-hydroxybutyrate) (hereinafter, sometimes referred to as P3HB).

Examples of the polymer B having only a plurality of repeating units represented by formula (1) include poly(3-hydroxybutyrate-co-3-hydroxyhexanoate) (hereinafter, sometimes referred to as P3HB3HH), poly(3-hydroxybutyrate-co-3-hydroxyvalerate) (hereinafter, sometimes referred to as P3HB3HV), and poly(3-hydroxybutyrate-co-3-hydroxypropionate (hereinafter, sometimes referred to as P3HB3HP).

Examples of the other hydroxyalkanoates except the 3-hydroxyalkanoate represented by formula (1) include a repeating unit represented by formula (2) (wherein R¹ is a hydrogen atom or an alkyl group represented by CₙH₂ₙ₊₁, n is an integer of 1 or more and 15 or less, and m is an integer of 2 to 10).

[-O-CHR¹-CₘH₂ₘ₊₁-CO-] ... (2)

Examples of the polymer B containing repeating units of formula (1) and formula (2) include poly(3-hydroxybutyrate-co-4-hydroxybutyrate) (for example, the following formula (P3HB4HB)).

From the viewpoint of increasing the melting point, it is preferable that the repeating unit of the polymer B contains at least 3-hydroxybutyrate among 3-hydroxyalkanoate represented by formula (1).

The polymer B preferably contains 50 mol% or more, and more preferably 70 mol% or more, of the repeating unit of 3-hydroxybutyrate with respect to the total repeating unit (100 mol%) of the hydroxyalkanoate.

The polymer B may have two or more repeating units of ester, and may be, for example, a di-polymer having two repeating units as described above, a tri-copolymer having three repeating units, and a tetra-copolymer having four repeating units.

Examples of the tri-copolymer include poly(3-hydroxybutyrate-co-3-hydroxyvalylate-co-3-hydroxyhexanoate) (hereinafter, sometimes referred to as (P3HB3HV3HH)).

As described above, the polymer B preferably contains 3-hydroxybutyrate among the repeating unit of the 3-hydroxyalkanoate represented by formula (1). A ratio XX of the repeating unit of 3-hydroxybutyrate to 100 mol of the ester repeating unit of the total hydroxyalkanoate is preferably 90 mol% or more, more preferably 95 mol% or more, and still more preferably 98.0 mol% or more.

The ratio XX is usually 100 mol% or less, preferably 99.9 mol% or less, and preferably 99.8 mol% or less.

The form of arrangement of the copolymer may be any form of a random copolymer, an alternating copolymer, a block copolymer, a graft copolymer, and the like.

The polymer B may have other ester repeating units except those of formula (1) and formula (2), but the main chain of the other ester repeating units does not contain an aromatic hydrocarbon structure. That is, the polymer B is an aliphatic polyester. However, it is possible that a group having an aromatic hydrocarbon group is bonded to carbon in the main chain of the other ester repeating unit.

As described in L. Tripathi., M. C. Factories, 11, 44 (2012), the composition ratio of the repeating unit in the polymer B can be determined by calculation from the results of NMR measurement such as 1H-NMR and 13C-NMR.

Furthermore, the polymer B may be a mixture of two or more polymers of a poly(3-hydroxyalkanoate)-based polymer.

The weight average molecular weight (Mw) of the polymer B can be 10000 to 1000000, and is preferably 20000 to 800000 and more preferably 30000 to 600000. When the weight average molecular weight (Mw) is 10000 or more, a molded body excellent in impact strength and tensile elongation can be obtained. Furthermore, when the weight average molecular weight is 500000 or less, the dispersibility in the olefin-based polymer A is improved. The weight average molecular weight may be 400000 or less, 300000 or less, 200000 or less, or 100000 or less. Note that, in the present specification, the weight average molecular weight (Mw) is measured by GPC using standard polystyrene as a molecular weight standard substance.

The polymer B is a thermoplastic resin, and is suitably crystalline.

The melt mass flow rate (MFR (B)) of the polymer B as measured according to JIS K7210-2014 under conditions of a temperature of 190°C or 170°C and a load of 2.16 kgf is preferably 0.1 g/10 min or more and 200 g/10 min or less. The MFR (B) may be 1 g/10 min or more, 3 g/10 min or more, 5 g/10 min or more, 7 g/10 min or more, 8 g/10 min or more, 10 g/10 min or more, or 20 g/10 min or more. The MFR (B) may be 150 g/10 min or less or 100 g/10 min or less.

The melting point (Tm) of the polymer B is 150°C or higher, and may be 155°C or higher, 160°C or higher, 165°C or higher, 170°C or higher, or 175°C or higher. The melting point (Tm) of the polymer B can be 220°C or lower, and may be 200°C or lower or 190°C or lower.

The melting point (Tm) of the polymer B is measured by the position of a main peak based on melting of a crystal obtained by differential scanning calorimetry (DSC) measurement in accordance with JIS K7121.

The poly(3-hydroxyalkanoate)-based polymer may be produced by microorganisms, and may be derived from a compound (such as a cyclic lactone) derived from a petroleum or plant source.

In the poly(3-hydroxyalkanoate)-based polymer, each repeating unit of the hydroxyalkanate may consist of only the D-form (R-form) as in the case of a polymer produced from a microorganism, or the repeating unit of the hydroxyalkanoate may include both the D-form (R-form) and the L-form (S-form) as in the case of a polymer derived from a mixture of the D-form (R-form) and the L-form (S-form).

In a poly(3-hydroxyalkanoate)-based polymer produced from a microorganism, the repeating unit of formula (1) can be expressed as in the following formula. In formula (BI-1), n represents the degree of polymerization.

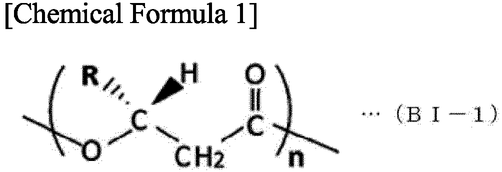

Further, for example, poly-(3-hydroxybutyrate) produced from a microorganism has the structure as described below. In formula (BI-2), n represents the degree of polymerization.

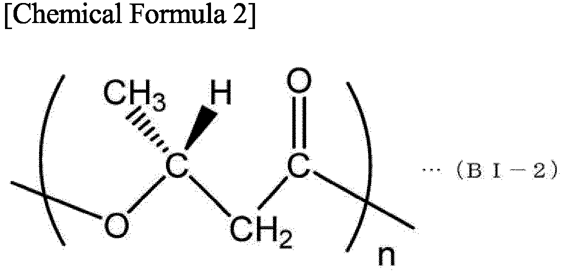

Furthermore, poly-(3-hydroxybutyrate-co-3-hydroxyhexanoate) produced from a microorganism has the structure as described below. In formula (BI-3), m and n represent the degree of polymerization.

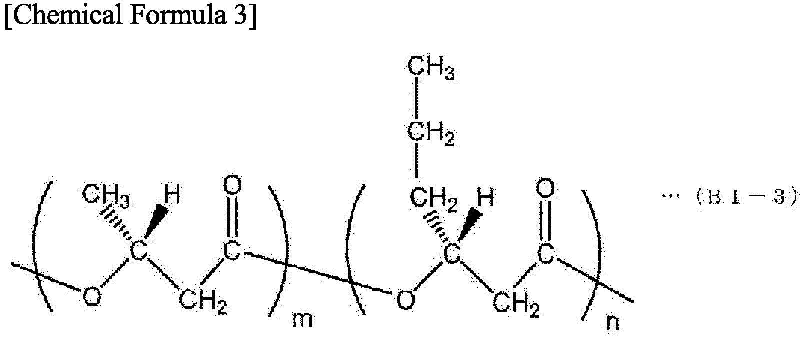

Furthermore, poly-(3-hydroxybutyrate-co-4-hydroxybutyrate) produced from a microorganism has the structure as described below. In formula (BI-4), m and n represent the degree of polymerization.

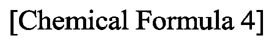

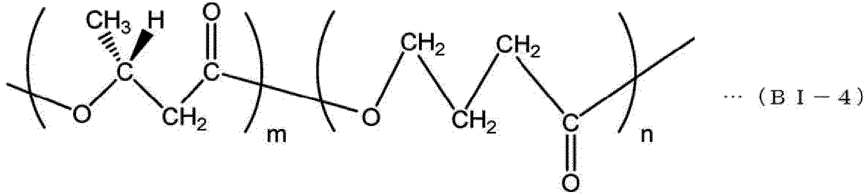

The polymer B can be biodegradable.

For example, the poly(3-hydroxyalkanoate)-based polymer can be produced by microorganisms such as Alcaligeneseutrophus AC32 strain in which PHA synthase enzyme gene derived from Aeromonascaviae was introduced into Alcaligenes eutrophus (international deposit under the Budapest Treaty, international depositary authority: National Institute of Advanced Industrial Science and Technology Center (Center 6, 1-1-1 Higashi, Tsukuba City, Ibaraki Prefecture, Japan), original deposit date: August 12, 1996, transferred on August 7, 1997, accession number FERMBP-6038 (transferred from original deposit FERMP-15786)) (J. Bacteriol., 179, 4821 (1997)).

### (Compound C)

The compound C has, in the molecule, at least one functional group selected from the group consisting of a heterocyclic group having two or more heteroatoms, a cyclic ether group, an acid anhydride group, an isocyanate group, and a carbodiimide group.

The compound C may be a low-molecular-weight compound, but is preferably a high-molecular-weight compound having a weight average molecular weight Mw of 5000 or more. When the compound C is a high-molecular-weight compound, the functional group may be present in any of a main chain, a side chain, and a terminal, but is preferably present in a side chain. The polymer may be any copolymer of block, graft, and random.

The compound C may have a functional group except the above-described functional groups. The compound C may be a mixture of two or more kinds of compounds.

A preferred functional group is a heterocyclic group having two or more heteroatoms or a cyclic ether group.

### (Compound C Having Heterocyclic Group Having Two or More Heteroatoms)

Examples of the heteroatom include N, O, S, and P. The heterocyclic group may be saturated or unsaturated, but is preferably unsaturated. The total number of carbon atoms and heteroatoms constituting the ring may be 3 to 9.

The heterocyclic group preferably has two or more kinds of heteroatoms. Examples of the combination of two kinds thereof include a combination of O and N.

The heterocyclic group is preferably an oxazolyl group. In particular, a 2-oxazolyl group is preferable. The 2-oxazolyl group is represented by the following formula. R¹ to R⁴ each independently represent a hydrogen atom or a hydrocarbon group having 1 to 20, preferably 1 to 10 carbon atoms. * represents a bond, and when the compound C is a polymer, an oxazolyl group may be bonded to a carbon atom constituting the main chain directly or via another functional group. Examples of the other functional group include an alkyl group having 1 to 12 carbon atoms, an alkyl group having an oxygen atom and having 1 to 12 carbon atoms, and an alkyl group containing a sulfur atom and having 1 to 12 carbon atoms.

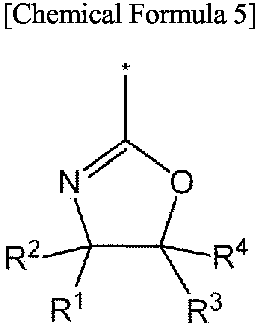

The compound C may be a homopolymer of an oxazolyl group-containing monomer, and may be a copolymer of an oxazolyl group-containing monomer and an oxazolyl group-free monomer.

Examples of the oxazolyl group-containing monomer include vinyloxazolines {such as vinyloxazoline (2-vinyl-2-oxazoline or the like) and vinyloxazoline having a substituent [for example, alkyl-vinyloxazoline (for example, C1-20 alkyl-vinyloxazoline, preferably C1-10 alkyl-vinyloxazoline, still more preferably mono- or di-C1-4 alkyl-vinyloxazoline such as 2-vinyl-4-methyl-2-oxazoline, 2-vinyl-4,4-dimethyl-2-oxazoline, 2-vinyl-4-ethyl-2-oxazoline, 2-vinyl-4-propyl-2-oxazoline, 2-vinyl-4-butyl-2-oxazoline, 2-vinyl-5-methyl-2-oxazoline, 2-vinyl-5-ethyl-2-oxazoline, 2-vinyl-5-propyl-2-oxazoline, and 2-vinyl-5-butyl-2-oxazoline]}; isopropenyl oxazolines {such as isopropenyl oxazoline (2-isopropenyl-2-oxazoline or the like) and isopropenyl oxazoline having a substituent [for example, alkyl-isopropenyl oxazoline (for example, C1-20 alkyl-isopropenyl oxazoline, preferably C1-10 alkyl-isopropenyl oxazoline, still more preferably mono- or di-C1-4 alkyl-isopropenyl oxazoline such as 2-isopropenyl-4-methyl-2-oxazoline, 2-isopropenyl-4,4-dimethyl-2-oxazoline, 2-isopropenyl-4-ethyl-2-oxazoline, 2-isopropenyl-4-propyl-2-oxazoline, 2-isopropenyl-4-butyl-2-oxazoline, 2-isopropenyl-5-methyl-2-oxazoline, 2-isopropenyl-5-ethyl-2-oxazoline, 2-isopropenyl-5-propyl-2-oxazoline, and 2-isopropenyl-5-butyl-2-oxazoline)]}; and allyl oxazolines corresponding thereto.

Among them, isopropenyl oxazolines are preferable, and 2-isopropenyl-2-oxazoline is particularly preferable. In this case, the compound C has a structural unit of 4,5-dihydro-2-(1-methylethylene)-oxazolyl.

The oxazolyl group-containing monomer may be used singly or in combination of two or more kinds thereof.

The ratio of the structural unit based on the oxazolyl group-containing monomer in the compound C is not particularly limited, and may be, for example, 1 mass% or more (for example, 5 mass% or more), preferably 10 mass% or more, and still more preferably 15 mass% or more with respect to the entire compound C.

In particular, the ratio of the structural unit based on the oxazolyl group-containing monomer to the entire compound C may be 20 mass% or more, preferably 30 mass% or more, and still more preferably 40 mass% or more (for example, 45 mass% or more), and can also be 50 mass% or more (for example, 60 mass% or more, preferably 70 mass% or more).

The oxazolyl group-free monomer can be appropriately selected according to use applications and the like of the oxazolyl-containing polymer and is not particularly limited, and examples thereof include styrene-based monomers or aromatic vinyl-based monomers such as styrene, α-alkylstyrene (for example, α-C1-4 alkylstyrene such as α-methylstyrene), alkylstyrene (for example, C1-4 alkylstyrene such as vinyltoluene), and halostyrene (for example, chlorostyrene or the like)]; vinyl esters (such as vinyl acetate and vinyl propionate); unsaturated nitriles (such as acrylonitrile and methacrylonitrile); vinyl ethers (for example, alkyl vinyl ethers such as methyl vinyl ether and ethyl vinyl ether, and the like); amide group-containing monomers [such as (meth)acrylamide and N-substituted (meth)acrylamide (for example, N-alkyl (meth)acrylamide such as N-methyl(meth)acrylamide)]; olefin-based monomers [such as alkene (for example, C2-10 alkenes such as ethylene, propylene, 1-butene, isobutylene, and 1-octene)]; halogen-containing monomers (for example, halo C2-10 alkenes such as vinyl chloride, vinylidene chloride, and vinyl fluoride); and (meth)acrylic monomers {such as (meth)acrylic acid, (meth)acrylic acid alkyl ester [for example, C1-20 alkyl (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, pentyl (meth)acrylate, n-hexyl (meth)acrylate, and 2-ethylhexyl (meth)acrylate, and the like], cycloalkyl (meth)acrylate [for example, C3-20 cycloalkyl (meth)acrylate such as cyclohexyl (meth)acrylate, and the like], aryl (meth)acrylate [for example, C6-20 aryl (meth)acrylate such as phenyl (meth)acrylate], aralkyl (meth)acrylate [for example, C6-10 aryl C1-4 alkyl (meth)acrylate such as benzyl (meth)acrylate], (meth)acrylic acid ester having a hydroxyl group [such as hydroxyalkyl (meth)acrylate (for example, hydroxy C2-10 alkyl (meth)acrylate such as 2-hydroxyethyl (meth)acrylate, and the like)], (meth)acrylic acid ester having an alkoxy group [for example, alkoxyalkyl (meth)acrylate (for example, C1-10 alkoxy C2-10 alkyl (meth)acrylate such as 2-methoxyethyl (meth)acrylate, and the like)], and glycidyl (meth)acrylate}.

The oxazolyl group-free monomer may be used singly or in combination of two or more kinds thereof.

Among these oxazolyl group-free monomers, in particular, a styrene-based monomer may be suitably used.

When the oxazolyl group-free monomer includes a styrene-based monomer, the ratio of the structural unit derived from the styrene-based monomer to the structural unit derived from the oxazolyl group-free monomer may be, for example, 5 mass% or more (for example, 10 mass% or more), preferably 20 mass% or more (for example, 30 mass% or more), still more preferably 40 mass% or more (for example, 50 mass% or more), and particularly preferably 60 mass% or more (for example, 70 mass% or more), and may be 80 mass% or more (for example, 90 mass% or more).

When the oxazolyl group-free monomer is used, the ratio of the structural unit derived from the oxazolyl group-containing monomer and the structural unit derived from the oxazolyl group-free monomer, that is, the former/the latter (mass ratio) may be, for example, 99/1 to 5/95 (for example, 98/2 to 10/90), preferably 97/3 to 12/88 (for example, 96/4 to 15/85), and still more preferably about 95/5 to 18/82 (for example, 93/7 to 20/80), and may be usually 99/1 to 25/75 (for example, 98/2 to 30/70, preferably 95/5 to 40/60, and still more preferably 90/10 to 45/55).

The compound containing an oxazolyl group may be a low-molecular-weight compound instead of a high-molecular-weight compound. Examples of the low-molecular-weight compound include those having, as a constituent unit, 2,2'-o-phenylenebis(2-oxazoline), 2,2'-m-phenylenebis(2-oxazoline), 2,2'-p-phenylenebis(2-oxazoline), 2,2'-p-phenylenebis(4-methyl-2-oxazoline), 2,2'-m-phenylenebis(4-methyl-2-oxazoline), 2,2'-p-phenylenebis(4,4'-dimethyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-ethylenebis(4-methyl-2-oxazoline), 2,2'-diphenylenebis(2-oxazoline), or a divalent group obtained by eliminating two hydrogen atoms from each of the above components.

### (Compound C Having Cyclic Ether Group)

The cyclic ether group is a group in which one or two -CH₂- in a cycloalkyl group are substituted with -O-. The number of atoms constituting the ring may be 10 or less.

Examples of the cyclic ether group include an epoxy group (a group obtained by removing one hydrogen atom from ethylene oxide (oxacyclopropane)), an oxetane group (a group obtained by removing one hydrogen atom from oxetane), and a tetrahydrofuran group (a group obtained by removing one hydrogen atom from tetrahydrofuran). Among the compounds C having a cyclic ether group, a compound having an epoxy group is preferable. Furthermore, the compound C having a cyclic ether group is preferably a polymer.

The compound C may be a homopolymer of a cyclic ether group-containing monomer, and may be a copolymer of a cyclic ether group-containing monomer and a cyclic ether group-free monomer.

When the cyclic ether group is an epoxy group, the compound C may be any of a glycidyl ether compound, a glycidyl ester compound, a glycidyl amine compound, a glycidyl imide compound, and an alicyclic epoxy compound. Among them, a copolymer of a cyclic ether group-containing monomer such as a glycidyl ester monomer and ethylene is particularly preferable.

Examples of the cyclic ether group-containing monomer include an epoxy group-containing monomer and an oxetane group-containing monomer. The cyclic ether group-containing monomer may be mixed alone or two or more kinds thereof may be mixed.

Examples of the epoxy group-containing monomer include glycidyl ether monomers such as 4-hydroxybutyl acrylate glycidyl ether (for example, α,β-unsaturated glycidyl ester); glycidyl ester monomers such as glycidyl acrylate and glycidyl methacrylate; glycidylamine monomers, glycidylimide monomers; and alicyclic epoxy monomers such as 3,4-epoxycyclohexylmethyl acrylate and 3,4-epoxycyclohexylmethyl methacrylate, and these can be used singly or in combination.

Examples of the oxetane group-containing monomer include 3-oxetanylmethyl (meth)acrylate, 3-methyl-3-oxetanylmethyl (meth)acrylate, 3-ethyl-3-oxetanylmethyl (meth)acrylate, 3-butyl-3-oxetanylmethyl (meth)acrylate, and 3-hexyl-3-oxetanylmethyl (meth)acrylate, and these can be used singly or in combination.

An epoxy group-free monomer is not particularly limited, and those exemplified for the oxazolyl group-free monomer described above can be appropriately used. Suitable examples thereof include ethylene, vinyl acetate, and methyl acrylate.

In particular, the compound C is preferably a copolymer of ethylene and α,β-unsaturated glycidyl ester. Examples of the α,β-unsaturated glycidyl ester include glycidyl acrylate, glycidyl methacrylate, glycidyl ethacrylate, and glycidyl itaconate. Two or more of these compounds may be used. Among them, glycidyl methacrylate is preferably used.

The ratio of the structural unit derived from the cyclic ether group-containing monomer is not particularly limited, and may be, for example, 1 mass% or more (for example, 5 mass% or more), preferably 10 mass% or more, and still more preferably 15 mass% or more with respect to the entire compound C.

In particular, the ratio of the structural unit derived from the cyclic ether group-containing monomer to the entire compound C may be 20 mass% or more, preferably 30 mass% or more, and still more preferably 40 mass% or more (for example, 45 mass% or more), and can also be 50 mass% or more (for example, 60 mass% or more, preferably 70 mass% or more).

When the cyclic ether group-free monomer is used, the ratio of the structural unit derived from the cyclic ether group-containing monomer and the structural unit derived from the cyclic ether group-free monomer, that is, the former/the latter (mass ratio) may be, for example, 99/1 to 5/95 (for example, 98/2 to 10/90), preferably 97/3 to 12/88 (for example, 96/4 to 15/85), and still more preferably about 95/5 to 18/82 (for example, 93/7 to 20/80), and may be usually 99/1 to 25/75 (for example, 98/2 to 30/70, preferably 95/5 to 40/60, and still more preferably 90/10 to 45/55).

The acid anhydride group is a monovalent substituent containing *-CO-O-CO-* (* represents a binding position).

Examples of the acid anhydride group include a group formed by removing one hydrogen atom from R²⁰-CO-O-CO-R²⁰ (in the above formula, R²⁰ independently represents an organic group, and R²⁰ may be bonded to each other to form a ring).

Examples of the acid anhydride group include a group obtained by removing one hydrogen atom from succinic anhydride, a group obtained by removing one hydrogen atom from maleic anhydride, a group obtained by removing one hydrogen atom from glutaric anhydride, and a group obtained by removing one hydrogen atom from phthalic anhydride, and may be a group obtained by removing one hydrogen atom from carboxylic anhydride.

Examples of the compound having an acid anhydride group include a polymer having at least one of these anhydride groups. Examples thereof include maleic anhydride-modified polypropylene.

The isocyanate group is represented by -N=C=O. Examples of the compound C having an isocyanate group include polyisocyanate.

The carbodiimide group is a group represented by -N=C=N-. An example of the compound having a carbodiimide group may be diisopropylcarbodiimide, 1-ethyl-3-[3-(dimethylamino)propyl]carbodiimide, or a cyclic compound.

### <Olefin-Based Polymer A>

The olefin-based polymer A is a polymer containing 50 mass% or more of a structural unit derived from an olefin having 2 or more and 10 or less carbon atoms (provided that, the total amount of the olefin-based polymer is taken as 100 mass%). Examples of the olefin having 2 or more and 10 or less carbon atoms include ethylene, propylene, 1-butene, 4-methyl-1-pentene, 1-hexene, 1-octene, and 1-decene.

The olefin-based polymer A may contain a structural unit derived from a monomer except olefins having 2 or more and 10 or less carbon atoms Examples of the monomer except olefins having 2 or more and 10 or less carbon atoms include aromatic vinyl monomers such as styrene; unsaturated carboxylic acids such as acrylic acid and methacrylic acid; unsaturated carboxylic acid esters such as methyl acrylate, ethyl acrylate, butyl acrylate, methyl methacrylate, and ethyl methacrylate; vinyl ester compounds such as vinyl acetate; conjugated dienes such as 1,3-butadiene and 2-methyl-1,3-butadiene (isoprene); and non-conjugated dienes such as dicyclopentadiene and 5-ethylidene-2-norbornene.

The olefin-based polymer A can be at least one selected from the group consisting of an ethylene-based polymer, a propylene-based polymer, and a butene-based polymer, and may be a combination of any two or more kinds thereof.

The ethylene-based copolymer is a polymer containing 50 mass% or more of a structural unit derived from ethylene, and examples thereof include an ethylene homopolymer, an ethylene-1-butene copolymer, an ethylene-1-hexene copolymer, an ethylene-1-octene copolymer, and an ethylene-1-butene-1-hexene copolymer. The ethylene-based copolymer may be a combination of two or more ethylene-based copolymers.

The propylene-based copolymer is a polymer containing 50 mass% or more of a structural unit derived from propylene, and examples thereof include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer. The propylene-based copolymer may be a combination of two or more kinds of propylene-based copolymers. It is suitable that the olefin-based polymer A is a propylene-based copolymer.

The butene-based copolymer is a polymer containing 50 mass% or more of a structural unit derived from 1-butene, and examples thereof include a 1-butene homopolymer, a 1-butene-ethylene copolymer, a 1-butene-propylene copolymer, a 1-butene-1-hexene copolymer, a 1-butene-1-octene copolymer, a 1-butene-ethylene-propylene copolymer, a 1-butene-ethylene-1-hexene copolymer, a 1-butene-ethylene-1-octene copolymer, a 1-butene-propylene-1-hexene copolymer, and a 1-butene-propylene-1-octene copolymer. The butene-based copolymer may be a combination of two or more kinds of butene-based copolymers.

The olefin-based polymer A can be produced by using a known polymerization method using a known polymerization catalyst.

The melt mass flow rate (MFR) of the olefin-based polymer A as measured according to JIS K7210-2014 under conditions of a temperature of 230°C or 190°C and a load of 2.16 kgf is preferably 0.1 g/10 min or more and 200 g/10 min or less.

### (Additive)

The composition may contain an additive as necessary. The additive can be at least one selected from the group consisting of a stabilizer, an anti-bacterial agent, an anti-fungal agent, a dispersing agent, a plasticizer, a flame retardant, a tackifier, a colorant, a metal powder, an organic powder, an inorganic fiber, an organic fiber, an organic and inorganic composite fiber, an inorganic whisker, and a filler.

Examples of the stabilizer include at least one selected from the group consisting of a lubricant, an anti-aging agent, a heat stabilizer, a light resistance agent, a weathering agent, a metal deactivator, an ultraviolet absorber, a light stabilizer, and a copper inhibitor. Examples of the light resistance agent include a hindered amine-based light resistance agent.

Examples of the colorant include at least one selected from the group consisting of titanium oxide, carbon black, and an organic pigment. Examples of the metal powder include ferrite.

Examples of the organic powder include a protein. Examples of the inorganic fiber include a glass fiber and a metal fiber. Examples of the organic fiber include a carbon fiber and an aramid fiber. Examples of the inorganic whisker include potassium titanate whisker.

Examples of the filler include at least one selected from the group consisting of a glass bead, a glass balloon, a glass flake, asbesto, mica, calcium carbonate, talc, silica, calcium silicate, hydrotalcite, kaolin, diatomaceous earth, graphite, pumice stone, ebo flour, cotton flock, cork powder, barium sulfate, fluororesin, cellulose powder, and wood powder.

The composition may contain only one of the above additives, and may contain a combination of two or more kinds thereof.

### <Constitution of Composition>

The content of the compound C is 0.1 to 100 parts by mass with respect to 100 parts by mass of the total of the polymer B and the compound C. The content of the compound C may be 0.2 parts by mass or more, 0.5 parts by mass or more, 1 part by mass or more, 2 parts by mass or more, 5 parts by mass or more, 10 parts by mass or more, 12 parts by mass or more, or 15 parts by mass or more, and may be 90 parts by mass or less, 80 parts by mass or less, or 70 parts by mass or less.

The total proportion of the polymer B and the compound C in the entire composition may be 0.1 mass% or more, 02 mass% or more, 0.5 mass% or more, 1 mass% or more, 2 mass% or more, or 3 mass% or more, may be 100 mass%, and may be 90 mass% or less, 80 mass% or less, or 70 mass% or more.

The composition may contain an olefin-based polymer A. The amount of the olefin-based polymer A may be 1 to 2000 parts by mass with respect to 100 parts by mass of the polymer B.

According to the composition of the present embodiment, by containing the compound C, when the composition is heated in a cylinder for a certain period of time or longer and then the melt product is extruded from a die to form a strand, it is possible to suppress pulsation of the outer diameter of a molten strand and to increase uniformity of the thickness of the strand, while containing the aliphatic polyester-based polymer B.

The reason for this is not clear, but it is considered that since the compound C has a specific functional group, the compound C adsorbs a decomposition by-product of the polymer B and suppresses the decomposition of the polymer B by the decomposition by-product of the polymer B.

Furthermore, when the compound C has a heterocyclic group having two or more heteroatoms such as an oxazolyl group, an effect of suppressing generation of odor after melting is also exhibited.

### (Method for Producing Composition)

The composition I can be obtained by melt-kneading each raw material component. The composition can be obtained by melt-kneading the polymer B, the compound C, and optionally added additive, the olefin-based polymer A, and the like.

The kneading temperature (set temperature of a kneader) is preferably 150 to 300°C and more preferably 170°C to 280°C. It is possible to perform processing at 210°C or higher.

When the composition contains an olefin-based polymer, the composition may be produced by melt-kneading all of the olefin-based polymer A, the polymer B, the compound C, and the optionally added additive added at once, or some of the materials may be melt-kneaded first, and then the remaining materials may be added and melt-kneaded.

### (Method for Producing Molded Body of Composition)

A molded body of the above-described composition having a desired shape can be obtained by using a known resin molding method such as an injection molding method, an extrusion molding method, a vacuum molding method, a compression molding method, a press molding method, a foam molding method, a blow molding method, or a rotation molding method.

In particular, it is suitable to extrude the molten composition from a die to form a strand.

The diameter of the die can be 5 mm to 200 mm. The melting temperature during extrusion can be 150°C to 300°C.

Furthermore, the above-described composition can be bonded to other materials such as other resins, metals, paper, and leather to provide a multi-layer structure.

The surface of a molded body of the composition of the present invention may be subjected to a surface treatment. Examples of the surface treatment method include methods such as embossing treatment, corona discharge treatment, flame treatment, plasma treatment, and ozone treatment.

The above-described composition can be widely used as a resin material.

Examples of use applications of the resin composition of the present invention include fiber materials, external structural members, furniture and interior decorative members, household electric appliance members, toy members, gardening members, automobile members, and packaging materials. Examples of the fiber materials include a clothing fabric member, an interior fabric member, and an industrial fiber member, examples of the external structural members include a carport member, a fence member, a gate door member, a gate pillar member, a post member, a cycle port member, a deck member, a sunroom member, a roof member, a terrace member, a handrail member, a shade member, and an awning member, examples of the furniture and interior decorative members include a sofa member, a table member, a chair member, a bed member, a chest member, a cabinet member, and a dresser member, examples of the household electrical appliance members include a member for a watch, a mobile phone member, and a white home electric appliance member, examples of the toy members include a member for a plastic model, a member for a diorama, and a member for a video game main body, examples of the gardening members include a member for a planter, a member for a vase, and a member for a flowerpot, examples of the automobile members include a bumper material, an instrument panel material, and an airbag cover material, and examples of the packaging materials include a food packaging material, a packaging material for fiber, and a packaging material for miscellaneous goods. Further, examples of other use applications include monitor members, office automation (OA) equipment members, medical members, drainage pans, toiletry members, bottles, containers, snow remover members, and various building members.

### Examples

Hereinafter, the present invention will be described using Examples and Comparative Examples. The olefin-based polymer A, the aliphatic polyester-based polymer B, and the compound C used in Examples and Comparative Examples are shown below.
(1) Polymer A
   (A-1) Propylene Homopolymer
   MFR (230°C, 2.16 kg load): 7 g/10 min
   Melting point (Tm): 163°C
(2) Polymer B
   (B-1) Poly(3-hydroxybutyrate-co-3-hydroxyhexanoate)
   Structural formula: formula (BI-3)
   Content (mol%) of comonomer (3HH) component: 0.4 mol%
   Weight average molecular weight (Mw): 397800
   MFR (190°C, 2.16 kg load): 8 g/10 min
   MFR (210°C, 2.16 kg load): 171 g/10 min
   Melting point (Tm): 175°C
(3) Compound C
   (C-1) Oxazolyl Group-Containing Polystyrene
   (Trade name) EPOCROS RPS-1005: manufactured by NIPPON SHOKUBAI CO., LTD.
   MFR (230°C, 2.16 kg load): 27.3 g/10 min
   Molecular weight (Mw): 157780
   Functional group contained: oxazolyl group

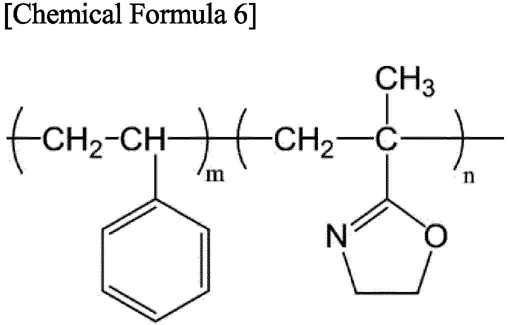

### (C-2) Ethylene-Glycidyl Methacrylate (E-GMA) Copolymer

(Trade name) Bondfast BF-E: manufactured by Sumitomo Chemical Co., Ltd.
MFR (190°C, 2.16 kg load): 3 g/10 min
Molecular weight (Mw): 210000

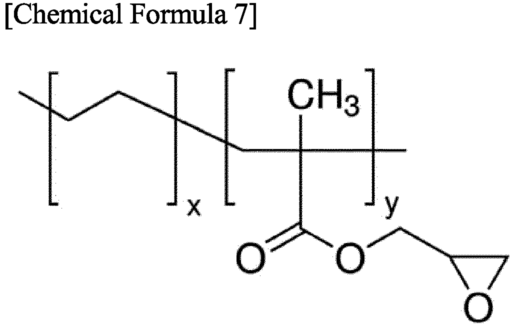

### (C-3) Styrene-Ethylene-Butadiene-Styrene Copolymer

(Trade name) Tuftec H1052: manufactured by Asahi Kasei Corp.
MFR (230°C, 2.16 kg load): 13 g/10 min
Molecular weight (Mw): 104040

Physical properties of each polymer and composition were measured according to the methods described below.

### (1) Melt Mass Flow Rate (MFR, Unit: g/10 min)

It was measured according to the method specified in JIS K7210-2014. The measurement temperature was 230°C, 210 or 190°C, and the load was 2.16 kg. A cylinder to be melt-kneaded is made of metal, and the resin is not irradiated with light.

### (2) Weight Average Molecular Weight (Mw)

The weight average molecular weight (Mw) was calculated based on the measurement result of gel permeation chromatography (GPC). In the measurement of GPC, GPC-150C manufactured by Waters Corporation was used as a measuring device, an ortho-dichlorobenzene solution having a polymer concentration of 0.05 wt% was used, a mixed polystyrene gel column (PSKgelGMH6-HT manufactured by Tosoh Corporation) was used as a column, and the measurement temperature was 135°C.

### (3) Melting Point (Tm) of Polymer

It was measured according to the method specified in JIS K7121. The measurement temperature was -50°C to 200°C or -50°C to 250°C, and the temperature increasing rate was 10°C/min.

### (4) Content of Comonomer Component of Polymer B

The content of the comonomer component is the molar ratio of another repeating unit (3-hydroxyhexanoate (3HH) or 4-hydroxybutyrate (4HB)) except 3-hydroxybutyrate to the number of total ester repeating units of the hydroxyalkanoate of the polymer B.

The content of the comonomer component was determined using the 1H-NMR spectrum described in L. Tripathi., M. C. Factories, 11, 44

(2012).

### [Measurement Conditions]

Model: Bruker AVANCE 600
Probe: 10 mm cryoprobe
Measurement temperature: 135°C
Pulse repetition time: 1 sec
Pulse width: 45°
Number of integrations: 700 times
Magnetic field strength: 600 MHz

### (5) Pulsation Degree

The composition was retained in a cylinder at 230°C for 7 minutes by using Capilograph 1B manufactured by Toyo Seiki Seisaku-sho, Ltd., a molten strand was then extruded at a constant rate of 10 mm/min from an orifice diameter of 1 mm, the strand diameter was evaluated every 0.5 seconds for 50 seconds, and the standard deviation of the strand diameter was evaluated from the obtained results. The standard deviation of the strand diameter is the pulsation degree, and as the pulsation degree is lower, the stability of the strand diameter is higher.

### (6) Evaluation of Odor

The strand was evaluated for odor. Specifically, the composition was retained in a cylinder at 230°C for 7 minutes by using Capilograph 1B manufactured by Toyo Seiki Seisaku-sho, Ltd., a molten strand was then extruded at a constant rate of 10 mm/min from an orifice diameter of 1 mm, the extruded molten strand was solidified, and then the odor of the molten strand was sensory evaluated in an indoor environment at 23°C without odor. The number of subjects was three, odor was evaluated as "1 point" when no odor was felt, "2 points" when a weak odor was felt, and "3 points" when a strong odor was felt, and the scores of the evaluation results of the three subjects were averaged. As the score is lower, the odor is weaker.

### (Example 1)

94.0 mass% of the polymer (A-1), 5 mass% of the polymer (B-1), and 1 mass% of the component (C-1) were mixed, and the mixture was melt-kneaded using a 15 mm twin screw extruder KZW15-45MG (manufactured by Technovel Corporation) under the conditions of a cylinder setting temperature of 215°C, a screw rotation speed of 500 rpm, and an extrusion amount of about 4 kg/hr to obtain a composition. The pulsation degree of the composition was evaluated.

### (Example 2)

The same procedure as in Example 1 was performed except that 85.0 mass% of the polymer (A-1), 5 mass% of the polymer (B-1), and 10 mass% of the component (C-1) were mixed.

### (Example 3)

The same procedure as in Example 1 was performed except that 94.0 mass% of the polymer (A-1), 5 mass% of the polymer (B-1), and 1 mass% of the component (C-2) were mixed.

### (Comparative Example 1)

The same procedure as in Example 1 was performed except that 94.0 mass% of the polymer (A-1), 5 mass% of the polymer (B-1), and 1 mass% of the component (C-3) were mixed.

The final composition and evaluation results of each composition are shown in Table 1.

**[Table 1]**

| Table 1 | | Example 1 | Example 2 | Example 3 | Comparative Example 1 |
|---|---|---|---|---|---|
| Olefin-based polymer A | Type | A-1 | A-1 | A-1 | A-1 |
| | mass% | 94.0 | 85.0 | 94.0 | 94.0 |
| Aliphatic polyester-based polymer B | Type | B-1 | B-1 | B-1 | B-1 |
| | mass% | 5.0 | 5.0 | 5.0 | 5.0 |
| Compound C | Type | C-1 | C-1 | C-2 | C-3 |
| | Molecular weight (Mw) | 157780 | 157780 | 210000 | 104040 |
| | mass% | 1 | 10 | 1 | 1 |
| | C/(B+C) × 100 | 16.7 | 66.7 | 16.7 | 16.7 |
| Pulsation degree | (-) | 0.76 × 10⁻² | 0.98 × 10⁻² | 2.00 × 10⁻² | 9.20 × 10⁻² |
| Odor test | Subject 1 | 1 | 1 | 3 | 3 |
| | Subject 2 | 1 | 2 | 3 | 3 |
| | Subject 3 | 1 | 2 | 2 | 3 |
| | Result (average) | 1.0 | 1.7 | 2.7 | 3.0 |

## Claims

1. A composition comprising:
a polymer B; and
a compound C, wherein
the polymer B is an aliphatic polyester,
a content of the compound C is 0.1 parts by mass or more and less than 100 parts by mass with respect to 100 parts by mass of a total of the polymer B and the compound C, and
the compound C has at least one functional group selected from the group consisting of a heterocyclic group having two or more heteroatoms, a cyclic ether group, an acid anhydride group, an isocyanate group, and a carbodiimide group.

2. The composition according to Claim 1, wherein the heterocyclic group has two or more kinds of heteroatoms.

3. The composition according to Claim 2, wherein the two or more kinds of heteroatoms include a nitrogen atom and an oxygen atom.

4. The composition according to any one of Claims 1 to 3, wherein the heterocyclic group is an oxazolyl group.

5. The composition according to any one of Claims 1 to 4, wherein the cyclic ether group is an epoxy group.

6. The composition according to any one of Claims 1 to 5, wherein the compound C is a polymer having a weight average molecular weight Mw of 5000 or more.

7. The composition according to any one of Claims 1 to 6, wherein the compound C is a polymer having the functional group in a side chain.

8. The composition according to any one of Claims 1 to 7, wherein the polymer B is a poly(3-hydroxyalkanoate)-based polymer having a melting point of 150°C or higher.

9. The composition according to any one of Claims 1 to 8, further comprising an olefin-based polymer A.
